# EUROPÄISCHE PATENTANMELDUNG

(11) **EP 1 016 799 A2**
(43) Veröffentlichungstag der Anmeldung: **05.07.2000**
(21) Anmeldenummer: 99119791.4
(22) Anmeldetag: 06.10.1999
(51) Int. Cl.: F16C 33/78, F16J 15/32

(54) **Kassettendichtung für eine Wellenlagerung**

(30) Priorität: 28.12.1998 DE 19860426
(71) Anmelder: Firma Carl Freudenberg, 69469 Weinheim (DE)
(72) Erfinder: Drucktenhengst, Rolf, 68623 Lampertheim (DE)

(57) **Zusammenfassung**

Kassettendichtung zur Abdichtung des Ringspalts zwischen einem Gehäuse und einer darin gelagerten Welle mit einem in die Gehäusebohrung eingefügten Dichtelement und einem auf der Welle festgelegtem Innenring mit einer Lauffläche für das Dichtelement, sowie einem mit dem Innenring integral verbundenen Schleuderblech, das eine axial nach außen gerichtete Nut bildet, wobei das Dichtelement (2) aus einem Befestigungskranz (3) mit einem Nabenteil (4) besteht und das Nabenteil (4) abdichtend die Lauffläche (5) des Innenrings (6) umfaßt und der Befestigungskranz (3) mit seiner axial nach innen gerichteten freien Fläche (17) dem Schleuderblech (10) gegenüberliegend angeordnet ist.

## Beschreibung

### Technisches Gebiet

Die Erfindung befaßt sich mit einer Kassettendichtung zur Abdichtung des Ringspalts zwischen einem Gehäuse und einer darin gelagerten Welle, mit einem in die Gehäusebohrung eingefügten Dichtelement und einem auf der Welle festgelegtem Innenring mit einer Lauffläche für das Dichtelement, sowie einem mit dem Innenring integral verbundenen Schleuderblech, das eine axial nach außen gerichtete Nut bildet.

### Stand der Technik

Zur Abdichtung einer drehbaren Welle gegenüber dem feststehenden Gehäuse sind eine Vielzahl von Dichtungen bekannt. Verbreitet sind unter anderem auch sogenannte Kassettendichtungen, die im wesentlichen aus einem auf die Welle aufschiebbaren Laufring für die in der Gehäusebohrung angeordnete Lippendichtung bestehen. Die Laufringe haben den Vorteil, daß die Welle selbst keiner besonderen Oberflächenbearbeitung zu unterzogen werden braucht. Außerdem ist eine gezielte Anpassung der aufeinander gleitenden Werkstoffe möglich. Letztlich können Dichtungsring und Laufring im Reparaturfall leicht ausgewechselt werden.

Eine solche Kassettendichtung ist beispielsweise aus der DE AS 25 00 099 bekannt. Die beiden Teile der Dichtung und zwar der Lippendichtungsring und der Laufring sind über Krallen miteinander verbunden und axial miteinander arretiert. Diese Dichtung hat jedoch den Nachteil, daß bei einer axialen Verschiebung der Teile zueinander, die z. B. beim Einbau der Antriebswelle stattfindet, eine Reibung an den ineinandergreifenden Teilen auftritt, was zu einem Verschleiß und gegebenenfalls einer Zerstörung führen kann.

Durch die DE OS 196 24 611 ist eine Kassettendichtung bekannt geworden, mit der im Betrieb gute Ergebnisse erreicht werden. Jedoch kann auch hier ein ungewollter Verschleiß auftreten Bei einem mehrmaligen Ein- und Ausbau der Kassettendichtung für den mit dem Getriebe durchzuführenden Erprobungsfall, können auch Beschädigungen an der Dichtung auftreten, die ihre Wirksamkeit vermindern. So kann insbesondere beim Ein- und Ausbau von endseitig als Vielkeilwelle ausgebildeten Wellen eine Beschädigung den vergleichsweise weichen Dichtkörpern auftreten.

### Darstellung der Erfindung

Der Erfindung liegt die Aufgabe zugrunde, hier Abhilfe zu schaffen und ausgehend von einem Stand der Technik, wie er in der DE OS 196 24 611 behandelt ist, eine Kassettendichtung zu erstellen, die einfach in ihrem Aufbau ist und gegen Beschädigungen, insbesondere während der Montagevorgänge weitgehend geschützt ist. Die nach dem Einbau der Welle im axialen Kontakt der Teile mögliche Reibung und der nachfolgende Verschleiß sollen vermieden werden.

Die Lösung der gestellten Aufgabe wird bei der eingangs genannten Kassettendichtung dadurch erreicht, daß das Dichtelement aus einem Befestigungskranz mit einem Nabenteil besteht , wobei das Nabenteil abdichtend die Lauffläche des Innenrings umfaßt und der Befestigungskranz mit seiner axial nach innen gerichteten freien Fläche dem Schleuderblech gegenüberliegend angeordnet ist, so daß bei einer axialen Verschiebung des Dichtelements und des Innenrings zueinander die freie Fläche des Befestigungskranzes am Schleuderblech zur Anlage kommt. Eine solche Dichtung besteht aus nur wenigen Teilen, ist einfach zu fertigen und zu montieren. Das Dichtelement selbst wird bevorzugt aus Polytetrafluorethylen hergestellt. Es wird mit einem Außenring verbunden, der mit Pressitz in die Gehäusebohrung eingesetzt ist. Die Verbindung kann je nach Art der verwendeten Materialien in an sich bekannter Weise vorgenommen werden.

Bei einem am Innenring angebrachten und als Spritzring dienenden Schleuderblech mit einem radial nach außen abgewinkeltem flanschartigen Teil kommt der Befestigungskranz bei einer axialen Verschiebung an dem flanschartigen Teil zur Anlage. Andere Ausführungsformen sind jedoch auch möglich. So kann der Außenring mit einem sich in die vom Schleuderblech gebildete Nut erstreckenden Schutzring versehen sein, der den Befestigungskranz des Dichtelements trägt, so daß der Befestigungskranz bei einer axialen Verschiebung am Nutgrund zur Anlage kommt.

Der Außenring kann mit axial vorstehenden Stegen versehen sein, die mit Nasen ausgestattet als Schnappverbindung den flanschartigen Teil des Spritzrings hintergreifen. Auf diese Weise sind die beiden Teile der Kassettendichtung unverlierbar miteinander verbunden. Hier sind auch andere Verbindungen möglich. So kann der Außenring mit einem Sicherungsring versehen sein, der lösbar oder fest mit dem Außenring verbunden wird.

Der Außenring kann aus einem elastischen Kunststoff hergestellt werden, vorzugsweise einem Thermoplast.

Der Innenring besteht aus einem Metallring, an dem integral das Schleuderblech anschließt. Beide sind auf ihren radial innen liegenden Seiten mit einer Schicht aus elastomerem Material überzogen. Im Bereich des Innenrings ist die elastomere Schicht mit ringförmigen Vorsprüngen versehen um dadurch die Montage der Welle zu erleichtern und einen ausreichenden Festsitz zu der einzusetzenden Welle zu erreichen.

Das axial äußere Ende des Innenrings kann eine Abstufung haben, die von der elastomeren Schicht eingefaßt ist. Dabei wird die radial äußere Fläche der Schicht so ausgerichtet, daß sie plan zu Lauffläche des Innenrings verläuft.

Die elastomere Schicht des Innenrings ist an ihrem äußeren Abschluß mit einer ringförmigen Dichtlippe versehen, deren Innendurchmesser kleiner als der Innendurchmesser der ringförmigen Vorsprünge der elastomeren Schicht ist. Diese Dichtlippe dient zur Abdichtung einer Prüfwelle während der Erprobung des Getriebes. Für die Erprobung des Getriebes wird überlicherweise das Getriebe mit der Welle im Gehäuse zusammengebaut und die Erprobung durchgeführt. Während dieser Montage kann durch den Ein- und Ausbau der Abtriebswelle eine Beschädigung an der Beschichtung des Innenrings und auch eine unnötige Beanspruchung der Kassettendichtung auftreten. Um dieses zu vermeiden wird in weiterer Ausgestaltung der vorliegenden Erfindung ein Verfahren zur Erprobung von Schaltgetrieben vorgeschlagen, welches sich dadurch auszeichnet, daß für die Erprobung des Getriebes eine Prüfwelle als Abtriebswelle benutzt wird, deren Wellendurchmesser geringfügig kleiner als der Durchmesser der Endantriebswelle ist, so daß die Prüfwelle allein von der Ringförmigen Dichtlippe des Innenrings umfaßt wird. Für die Erprobung wird somit eine Prüfwelle benutzt, die von der Dichtlippe abgedichtet wird. Als Endantriebswelle wird hier die Abtriebswelle bezeichnet, die für den üblichen normalen Antrieb benutzt wird.

### Kurzbeschreibung der Zeichnungen

Die Erfindung wird anhand der Zeichnungen nachfolgend näher erläutert.

Es zeigen:
- Figur 1: den oberen Teil der Kassettendichtung im Längsschnitt,
- Figur 2: die Kassettendichtung mit einer anders ausgeführten Verbindung von Außen- und Innenring und
- Figur 3: die Kassettendichtung mit einem Schutzring.

### Ausführung der Erfindung

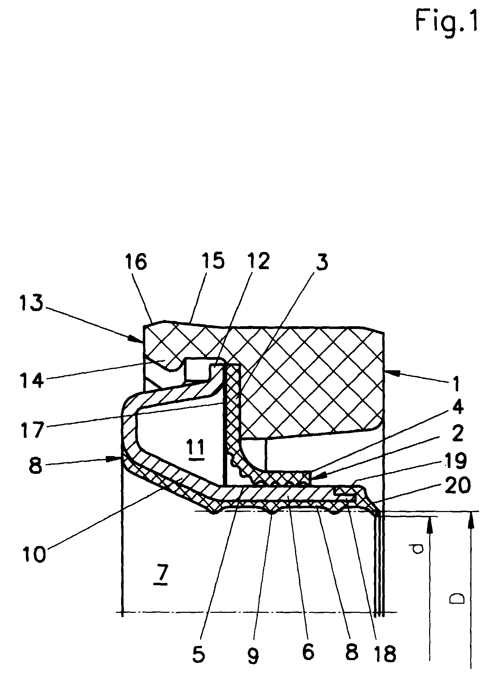

Die Figur 1 zeigt ein Ausführungsbeispiel der erfindungsgemäßen Kassettendichtung im Längsschnitt mit ihren wesentlichen Teilen. In die Bohrung eines nicht näher gezeichneten Gehäuses ist der Außenring 1 mit dem Dichtelement 2 mit Pressitz eingefügt. Das Dichtelement 2 ist aus Polytetrafluorethylen hergestellt und besteht aus einem Befestigungskranz 3 mit einem Nabenteil 4, welches abdichtend die Lauffläche 5 des Innenrings 6 umfaßt und auf ihrer Dichtfläche mit einer Drallunterbrechung versehen ist. Die Drallunterbrechung dient zur Rückführung des Schmiermittels. Der Innenring 6 ist fest mit der Welle 7 verbunden. Hierfür ist der Innenring 6 mit einer elastomeren Schicht 8 mit ringförmigen Vorsprüngen 9 ausgestattet.

Mit dem Innenring 6 ist das als Spritzring dienende Schleuderblech 10 integral verbunden. Das Schleuderblech 10 ist mehrfach abgewinkelt, so daß es eine axial nach außen gerichtete Nut 11 bildet. Außerdem ist es mit einem nach außen abgewinkelten flanschartigen Teil 12 versehen. Der für Montagezwecke konisch ausgebildete, direkt an die Lauffläche 5 des Innenrings 6 anschließende Teil des Schleuderblechs 10 ist ebenfalls mit der elastomeren Schicht 8 überzogen, wodurch eine Schutzfunktion sowohl gegenüber dem Schleuderblech 10 als auch gegenüber der einzusetzenden Welle 7 erreicht wird.

Der Außenring 1 ist mit drei auf seinem Umfang verteilten axial vorstehenden Stegen 13 versehen, die mit den Nasen 14 ausgestattet sind. Die Nasen 14 hintergreifen den flanschartigen Teil 12 des Spritzrings. Die Nasen 14 mit dem Flanschteil 12 bilden auf diese Weise eine Schnappverbindung, so daß Außenring 1 und Innenring 6 unverlierbar miteinander verbunden sind. Die Stege 13 sind, wie in der Figur gezeigt, mit ihrer Außenwand radial leicht ansteigend ausgebildet und im vorderen Teil wieder leicht abfallend, so daß zwei konisch Bereiche 15 und 16 entstehen. Der konische Bereich 16 erleichtert die Einführung der Kassettendichtung in die Gehäusebohrung, während durch den Bereich 15 die Preßsitzhalterung in der Bohrung unterstützt wird.

Das Dichtelement 2 ist axial am Außenring 1 befestigt. Mit seiner axial nach innen gerichteten freien Fläche 17 ist er gegenüber dem flanschartigen Teil 12 des Spritzrings angeordnet. Hierdurch wird der Außenring 1 geschützt. Bei einer axialen Verschiebung von Außenring 1 zu Innenring 6 liegt der Befestigungskranz 3 des Dichtelements 2, das aus verschleißfestem Material besteht, am Teil 12 an und verhindert dadurch die unmittelbaren Berührung und eventuelle Zerstörung des Außenrings 1.

Der Außenring 1 wird aus einem elastischen Kunststoff, vorzugsweise einem Thermoplast hergestellt. Für Anwendungsbereiche in denen eine höhere Steifheit erforderlich ist, kann der Außenring 1 selbstverständlich auch mit in das Material eingebetteten metallischen Verstärkungsringen versehen sein.

Das axial äußere Ende 18 des Innenrings 6 hat eine Abstufung, die von der elastomeren Schicht 8 eingefaßt ist. Die radial äußere Fläche 19 der Schicht 8 ist plan zur Lauffläche 5 des Innenrings 6, so daß bei der Montage des Außenrings 1 mit Innenring 6 hier keine Hindernisse vorhanden sind.

Die elastomere Schicht 8 des Innenrings 6 ist mit einer ringförmigen Dichtlippe 20 versehen, deren Innendurchmesser d kleiner ist als der Innendurchmesser D der ringförmigen Vorsprünge 9 der elastomeren Schicht 8. Diese Dichtlippe 20 ermöglicht ein neues Prüfverfahren für die Erprobung des Schaltgetriebes bei dem eine weitgehende Schonung der Vorsprünge 9 bei der Montage und auch bei der Erprobung der Getriebe erreicht wird. Für die Erprobung des Getriebes kann eine Prüfwelle als Abtriebswelle benutzt werden, deren Wellendurchmesser geringfügig kleiner als der Durchmesser der Endantriebswelle ist, so daß die Prüfwelle allein von der ringförmigen Dichtlippe 20 des Innenrings 6 abgedichtet wird.

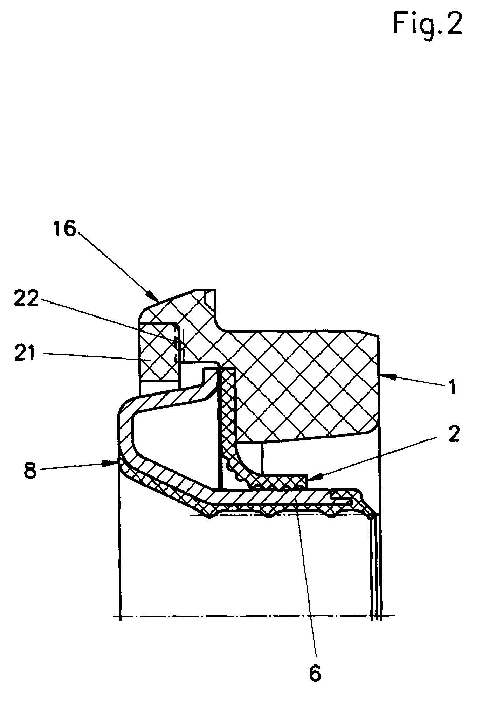

Die Figur 2 zeigt ein Ausführungsbeispiel, das in der Mehrzahl der Teile mit der Figur 1 übereinstimmt. Anders ist die Verbindung von Außenring 1 und Innenring 6. Hier wird keine Schnappverbindung benutzt, sondern es ist ein Sicherungsring 21 vorgesehen, der formschlüssig über radiale Nuten 22 mit dem Außenring 1 verbunden ist. Der Sicherungsring 21 kann außerdem noch mit dem Außen ring 1 verklebt sein.

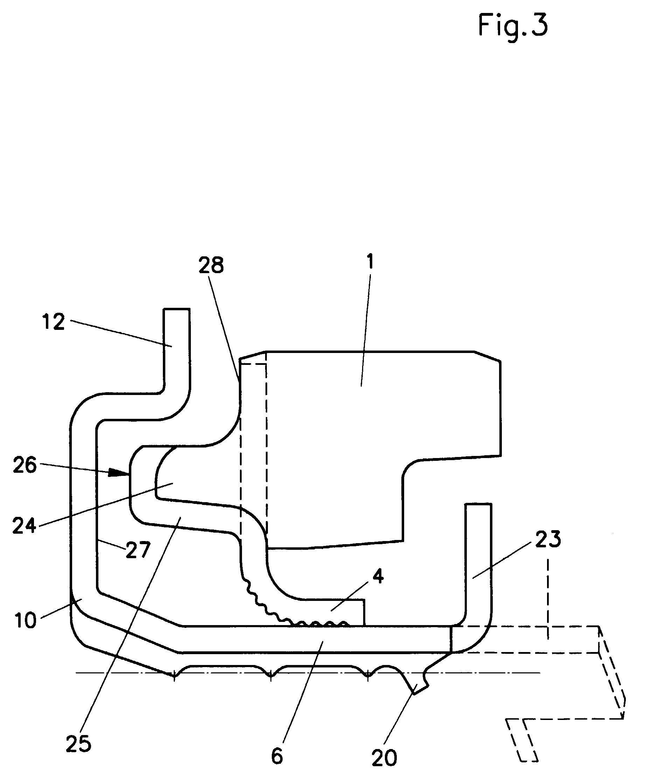

Die Figur 3 zeigt eine Ausführungsform, bei der der Außenring 1 am Innenring 6 über abgewinkelte Lappen 23 gehalten wird. In der Figur ist ein Lappen 23 gestrichelt in seiner Lage vor dem Abwinkeln eingezeichnet. Die Dichtlippe 20 für eine Prüfwelle mit kleinerem Durchmesser ist in diesem Ausführungsbeispiel etwas nach innen verlegt.

In die Nut 11 des Schleuderblechs 10 greift ein Schutzring 24 ein, der am Außenring 1 ausgebildet ist. Der Befestigungskranz 25 folgt der Kontur des Schutzrings 24 und hat eine axial nach innen gerichtete freie Fläche 26, mit der er bei einer axialen Verschiebung von Dichtelement 1 und Innenring 6 zueinander am Nutgrund 27 des Schleuderblechs 10 zur Anlage kommt. Eine unmittelbare Berührung zwischen der Metallfläche des Schleuderblechs 10 und des Dichtelements 1 aus beispielsweise Gummi wird vermieden. Es versteht sich, daß bei der gezeigten Ausführungsform der Abstand zwischen der freien Fläche 26 des Befestigungskranzes 25 und dem Nutgrund 27 geringer ist, als der Abstand zwischen der Dichtelementschulter 28 und dem Flanschteil 12 des Schleuderblechs 10. Die Form des Befestigungskranzes 25 wird bei der Einbringung des Außenrings 1 gebildet. Davor hat der Befestigungskranz 25 die gestrichelt eingezeichnete Form.

## Patentansprüche

1. Kassettendichtung zur Abdichtung des Ringspalts zwischen einem Gehäuse und einer darin gelagerten Welle mit einem in die Gehäusebohrung eingefügten Dichtelement und einem auf der Welle festgelegtem Innenring mit einer Lauffläche für das Dichtelement, sowie einem mit dem Innenring integral verbundenen Schleuderblech, das eine axial nach außen gerichtete Nut bildet, **dadurch gekennzeichnet,** daß das Dichtelement (2) aus einem Befestigungskranz (3, 25) mit einem Nabenteil (4) besteht, wobei das Nabenteil (4) abdichtend die Lauffläche (5) des Innenrings (6) umfaßt und der Befestigungskranz (3, 25) mit seiner axial nach innen gerichteten freien Fläche (17, 26) dem Schleuderblech (10) gegenüberliegend angeordnet ist, so daß bei einer axialen Verschiebung des Dichtelements (2) und des Innenrings (6) zueinander die freie Fläche (17, 16) des Befestigungskranzes (3, 25) am Schleuderblech (10) zur Anlage kommt.

2. Kassettendichtung nach Anspruch 1, dadurch gekennzeichnet, daß das Dichtelement (2) aus Polytetrafluorethylen (PTFE) oder einem vergleichbaren Material besteht.

3. Kassettendichtung nach Anspruch 1 oder 2, dadurch gekennzeichnet, daß das Dichtelement (2) mit einem Außenring (1) verbunden, ist der mit Preßsitz in die Gehäusebohrung eingesetzt ist.

4. Kassettendichtung nach einem der Ansprüche 1 bis 3, dadurch gekennzeichnet, daß das Schleuderblech (10) des Innenrings (6) ein als Spritzring dienendes radial nach außen abgewinkeltes flanschartiges Teil (12) hat, an dem der Befestigungskranz (3) bei axialer Verschiebung zur Anlage kommt.

5. Kassettendichtung nach einem der Ansprüche 1 bis 3, dadurch gekennzeichnet, daß der Außenring (1) einem Schutzring (24) hat, der sich in die Nut (11) des Schleuderblechs (10) erstreckt und den Befestigungskranz (25) des Dichtelements (2) trägt, so daß der Befestigungskranz (25) bei axialer Verschiebung am Nutgrund (27) zur Anlage kommt.

6. Kassettendichtung nach einem der Ansprüche 1 bis 5, dadurch gekennzeichnet, daß der Außenring (1) mit axial vorstehenden Stegen (13) versehen ist, die mit Nasen (14) ausgestattet als Schnappverbindung den flanschartigen Teil (12) des Spritzrings hintergreifen.

7. Kassettendichtung nach einem der Ansprüche 1 bis 5, dadurch gekennzeichnet, daß der Außenring (1) mit einem Sicherungsring (21) versehen ist, der formschlüssig und/oder über eine Klebeverbindung mit dem Außenring (1) verbunden ist.

8. Kassettendichtung nach einem der Ansprüche 1 bis 5, dadurch gekennzeichnet, daß der Außenring (1) aus einem elastischen Kunststoff, vorzugsweise einem Thermoplast besteht.

9. Kassettendichtung nach einem der Ansprüche 1 bis 8, dadurch gekennzeichnet, daß der Innenring (6) und das Schleuderblech (10) auf ihren radial nach innen liegenden Seiten mit einer Schicht (8) aus elastomerem Material versehen sind.

10. Kassettendichtung nach einem der Ansprüche 1 bis 9, dadurch gekennzeichnet, daß im Bereich des Innenrings (6) die elastomere Schicht (8) mit ringförmigen Vorsprüngen (9) versehen ist.

11. Kassettendichtung nach einem der Ansprüche 1 bis 10, dadurch gekennzeichnet, daß das axial äußere Ende (18) des Innenrings (6) eine Abstufung hat und von der elastomeren Schicht (8) eingefaßt ist, wobei die radial äußere Fläche (19) der Schicht (8) plan zur Lauffläche (5) des Innenrings (6) verläuft.

12. Kassettendichtung nach einem der Ansprüche 1 bis 11, dadurch gekennzeichnet, daß die elastomere Schicht (8) des Innenrings (6) mit einer ringförmigen Dichtlippe (20) versehen ist, deren Innendurchmesser (d) kleiner als der Innendurchmesser (D) der ringförmigen Vorsprünge (9) der elastomeren Schicht (8) ist.

13. Kassettendichtung nach einem der Ansprüche 1 bis 12, dadurch gekennzeichnet, daß das axial äußere Ende des Innenrings (6) mit vorstehenden Lappen (23) versehen ist, die abgewinkelt den Außenring (1) am Innenring (6) halten.

14. Verfahren zur Erprobung von Motorgetrieben nach einem der Ansprüche 1 bis 12, dadurch gekennzeichnet, daß für die Erprobung des Schaltgetriebes eine Prüfwelle als Abtriebswelle benutzt wird, deren Wellendurchmesser geringfügig kleiner als der Durchmesser der Endantriebswelle ist, so daß die Prüfwelle allein von der ringförmigen Dichtlippe (20) des Innenrings (6) umfaßt wird.
